(19) **Europäisches Patentamt**
**European Patent Office**
**Office européen des brevets**

(11) **EP 4 723 031 A1**

(12) **EUROPEAN PATENT APPLICATION**
published in accordance with Art. 153(4) EPC

(43) Date of publication:
**08.04.2026 Bulletin 2026/15**

(21) Application number: **23939537.9**

(22) Date of filing: **29.05.2023**

(51) International Patent Classification (IPC):
***G06T 7/00*** *(2017.01)*

(52) Cooperative Patent Classification (CPC):
**G06T 7/00**

(86) International application number:
**PCT/JP2023/019965**

(87) International publication number:
**WO 2024/247058 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **FUJITSU LIMITED**
**Kawasaki-shi, Kanagawa 211-8588 (JP)**

(72) Inventors:
• **KIKUCHI, Takashi**
  **Kawasaki-shi, Kanagawa 211-8588 (JP)**
• **KOHATA, Shun**
  **Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **GENERATION PROGRAM, GENERATION METHOD, AND INFORMATION PROCESSING DEVICE**

(57) An information processing apparatus extracts an object that is used by a person included in an image by acquiring the image that includes the person and analyzing the acquired image. The information processing apparatus generates a composite image in which the extracted object is arranged at a position that satisfies a predetermined condition on a basis of a position of the object that is used by the person included in the acquired image. The information processing apparatus generates, by using the generated composite image, a machine learning model that has been trained to identify the person who uses the object.

FIG.4

**Description**

Technical Field

The present invention relates to a generation program, and the like.

Background Art

If it is possible to detect specific motions of customers made with respect to objects, such as commodity products in a store, this information is able to be actively used to analyze purchasing trends. For example, a motion of a customer acquiring a commodity product from a commodity product shelf is one of the behaviors that reveals a purchasing intention of the customer.

In the following, first and second conventional technologies for detecting a motion of a customer made with respect to an object will be described.

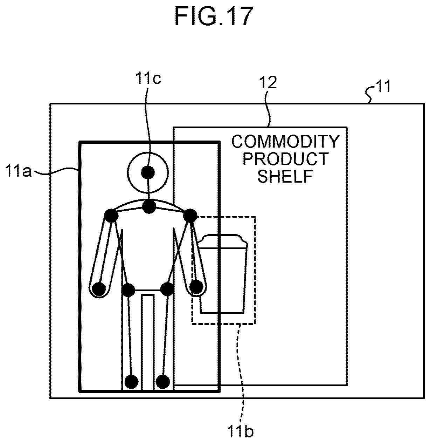

The first conventional technology will be described. FIG. 17 is a diagram for explaining the first conventional technology. Here, an apparatus that implements the first conventional technology is referred to as a "conventional apparatus A". The conventional apparatus A estimates a linkage between a person and an object on a rule base.

As illustrated in FIG. 17, for example, the conventional apparatus A specifies an area 11a of the person and an area 11b of the object by analyzing video image data 11 captured by a camera. Furthermore, the conventional apparatus A specifies skeleton information 11c on the person by analyzing the area 11a of the person. In the skeleton information 11c, coordinate information related to each joint of the person is set. By using the skeleton information 11c, it is possible to specify the coordinates of a portion of a hand or the like of the person.

In a case where the conventional apparatus A sequentially specifies that the hand of the person enters a commodity product shelf 12, detects the object from the commodity product shelf 12, and specifies that the hand of the person is touching the object on the basis of a detection rule that has been set in advance, the conventional apparatus A detects a motion of the person holding the object.

In the first conventional technology, in order to improve the accuracy of detection, detailed detection rules are to be set in accordance with an arrangement of a camera and an orientation of the person.

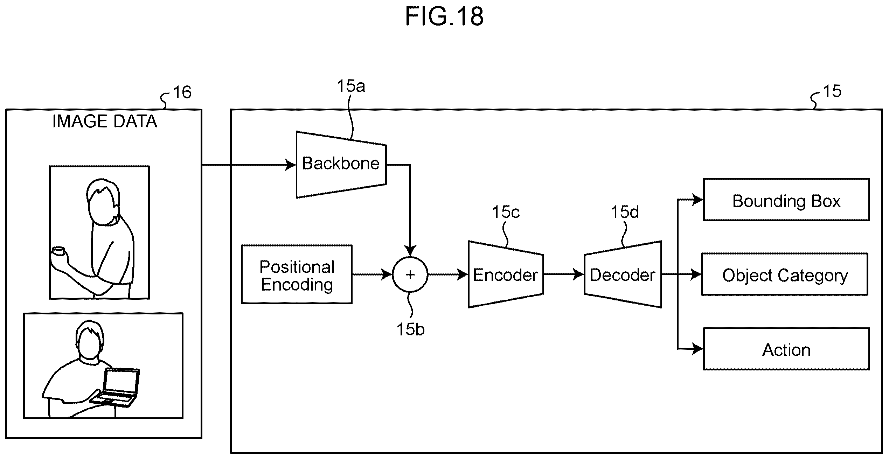

The second conventional technology will be described. FIG. 18 is a diagram for explaining the second conventional technology. Here, an apparatus that implements the second conventional technology is referred to as a "conventional apparatus B". The conventional apparatus B uses Human-Object Interaction Detection (HOID). For example, the HOID is a Transformer based machine learning model.

In the example illustrated in FIG. 18, the conventional apparatus B uses a machine learning model 15. As a result of inputting image data 16 to the machine learning model 15, the conventional apparatus B outputs an area of the person, an area of the object, and an action of the person performed with respect to the object.

In the machine learning model 15, a Backbone 15a, an adder 15b, an Encoder 15c, and a Decoder 15d are included. In a case where the image data 16 has been input, the Backbone 15a outputs a feature value of the image data 16. For example, the conventional apparatus B divides the image data 16 into a plurality of blocks, and inputs the plurality of blocks to the Backbone 15a.

A result of Positional Encoding and an output result of the Backbone 15a with respect to the image data 16 are input to the adder 15b. The adder 15b outputs, to the Encoder 15c, a result obtained by adding the result of the Positional Encoding to the output result of the Backbone 15a. In the Positional Encoding, a process of encoding each of the pieces of positional information related to the divided image data 16 is performed.

The Encoder 15c converts the data that has been input from the adder 15b to vector data, and inputs the vector data to the Decoder 15d. In a case where the vector data is input, the Decoder 15d outputs data on a Bounding Box, data on an Object Category, and data on an Action. The data on the Bounding Box indicates the area of the person, the area of the object, and the like included in the image data 16. The data on the Object Category indicates an attribute of the area that is indicated by each of the Bounding Boxes. In the attribute, the person, the object, and the like are included. The data on the Action indicates an action of the person performed with respect to the object.

In the second conventional technology, it is possible to train the machine learning model 15 by using teacher data, in which the relationship between the input data and a correct answer label has been defined, without setting the detailed detection rules as described above in the first conventional technology. Furthermore, in the second conventional technology, by inputting the image data, it is possible to specify the area of the person, the area of the object, and the action of the person performed with respect to the object at a time.

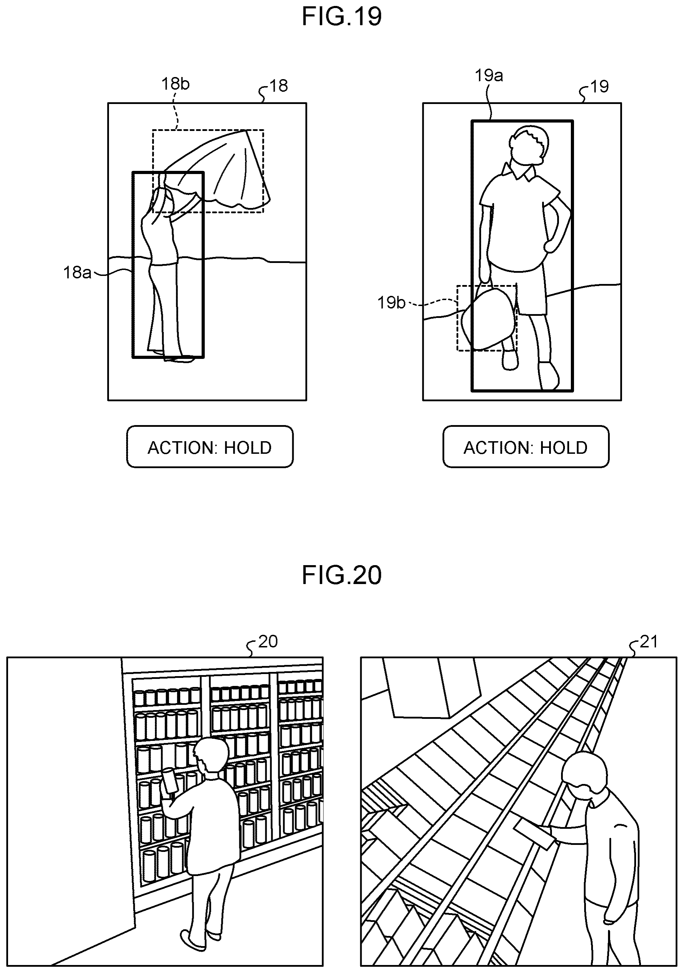

FIG. 19 is a diagram illustrating one example of a processing result obtained in the second conventional technology. For example, by inputting image data 18 to the machine learning model 15, the conventional apparatus B outputs an area 18a of the person, an area 18b of the object, and an action of a "hold". By inputting image data 19 to the machine learning model 15, the conventional apparatus B outputs an area 19a of the person, an area 19b of the object, and the action of a "hold".

Citation List

Patent Literature

Patent Literature 1: Japanese Laid-open Patent Publication No. 2018-15408

Summary

Technical Problem

However, in the second conventional technology described above, in a case where there are similar objects, such as in a case of a commodity product shelf in a store, or in a scene in which objects are included in a large number of backgrounds, it is not able to estimate with high accuracy which object is affected by the motion of the person.

FIG. 20 is a diagram illustrating one example of image data in which estimation accuracy decreases in the second conventional technology. For example, image data 20 containing a large number of similar commodity products, so that it is difficult to estimate which object is affected by the motion of the person by using the second conventional technology. Image data 21 contains a large number of objects on a background, and thus, it is also difficult to estimate which object is affected by the motion of the person by using the second conventional technology.

Moreover, as in the first conventional technology, even in a case where the motion of the person holding the object is detected on the basis of the detection rule, as in a case of the image data 20 and 21 illustrated in FIG. 20, if a large number of similar commodity products are included in the image data 20 and 21, the detection accuracy decreases.

As a result of this, there is a need to generate a machine learning model that estimates, with high accuracy, which object is affected by the motion of the person with respect to the image data in which a large number of similar objects are included.

Accordingly, it is an object in one aspect of an embodiment of the present invention to provide a generation program, a generation method, and an information processing apparatus capable of generating a machine learning model that estimates, with high accuracy, which object is affected by a motion of a person with respect to image data in which a large number of similar objects are included.

Solution to Problem

According to an aspect of the embodiment of the invention, a generation program causes a computer to execute a process including acquiring an image that includes a person extracting an object that is used by the person included in the image by analyzing the acquired image generating a composite image in which the extracted object is arranged at a position that satisfies a predetermined condition on a basis of a position of the object that is used by the person included in the acquired image and generating, by using the generated composite image, a machine learning model that has been trained to identify the person who uses the object.

Advantageous Effects of Invention

According to the present invention, it is possible to generate a machine learning model that estimates, with high accuracy, which object is affected by a motion of a person with respect to image data in which a large number of similar objects are included.

Brief Description of Drawings

FIG. 1 is a diagram illustrating one example of a system according to the present embodiment.
FIG. 2 is a diagram for explaining a machine learning model.
FIG. 3 is a diagram for explaining learning data.
FIG. 4 is a diagram for explaining a process of generating composite image data performed by an information processing apparatus.
FIG. 5 is a diagram for explaining targeted learning performed by the information processing apparatus.
FIG. 6 is a diagram for explaining machine learning performed by the information processing apparatus.
FIG. 7 is a diagram for explaining a process of an inference phase according to the present embodiment.

FIG. 8 is a functional block diagram illustrating a configuration of the information processing apparatus according to the present embodiment.

FIG. 9 is a diagram illustrating one example of a data structure of a learning data table.

FIG. 10 is a flowchart illustrating the flow of the process performed in the information processing apparatus according to the present embodiment.

FIG. 11 is a diagram illustrating a result of an accuracy evaluation.

FIG. 12 is a diagram illustrating an example of an augmentation of annotation data.

FIG. 13 is a diagram for explaining another process of generating composite image data.

FIG. 14 is a diagram illustrating one example of a skeleton model of a human body.

FIG. 15 is a diagram illustrating one example of joint names.

FIG. 16 is a diagram illustrating one example of a hardware configuration of a computer that implements the same function as that of the information processing apparatus according to the embodiment.

FIG. 17 is a diagram for explaining a first conventional technology.

FIG. 18 is a diagram for explaining a second conventional technology.

FIG. 19 is a diagram illustrating one example of a processing result obtained in the second conventional technology.

FIG. 20 is a diagram illustrating one example of image data in which estimation accuracy decreases in the second conventional technology.

Description of Embodiments

Hereinafter, preferred embodiments of a generation program, a generation method, and an information processing apparatus disclosed in the present application will be described in detail below with reference to the accompanying drawings. Furthermore, the present invention is not limited to the embodiments.

(Embodiment)

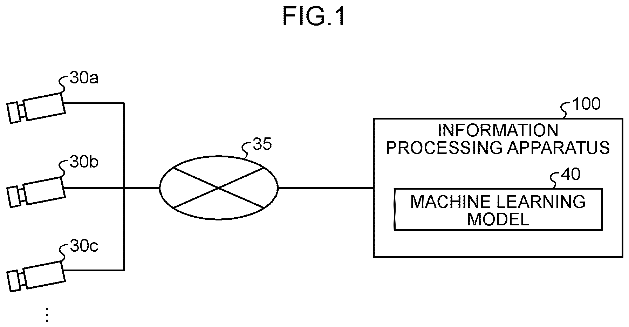

FIG. 1 is a diagram illustrating one example of a system according to the present embodiment. As illustrated in FIG. 1, this system includes cameras 30a, 30b, and 30c and an information processing apparatus 100. The cameras 30a to 30c and the information processing apparatus 100 are connected to one another via a network 35.

The cameras 30a to 30c are installed in an inside of a store that includes therein a commodity product shelf that accommodates commodity products. Each of the cameras 30a to 30c captures a video image including the commodity product shelf that is installed in the inside of the store, and transmits data on the captured video image to the information processing apparatus 100. In the description below, the data on the video image is referred to as "video image data". The video image data includes pieces of image data (still images) obtained in time series. The cameras 30a to 30c are collectively referred to as a "camera 30".

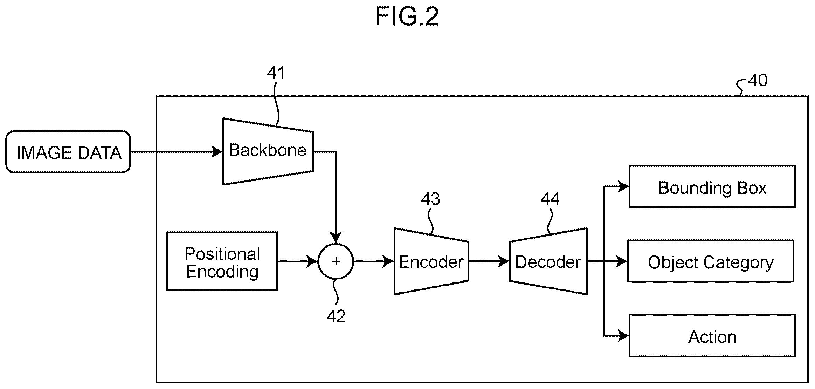

The information processing apparatus 100 uses a machine learning model 40, and performs various kinds of processes. FIG. 2 is a diagram for explaining a machine learning model. As illustrated in FIG. 2, the machine learning model 40 includes a Backbone 41, an adder 42, an Encoder 43, and a Decoder 44. In a case where the image data is input, the Backbone 41 outputs a feature value of the image data. For example, the information processing apparatus 100 divides the image data into a plurality of blocks, and inputs the image data to the Backbone 41. In the description below, an explanation is omitted, but the image data that is to be input to the Backbone 41 is divided and is then input to the Backbone 41.

A result of Positional Encoding and an output result of the Backbone 41 with respect to the image data are input to the adder 42. The adder 42 outputs a result obtained by adding the result of the Positional Encoding and the output result of the Backbone 41 to the Encoder 43. In the Positional Encoding, the information processing apparatus 100 performs a process of encoding each of the pieces of positional information on the image data that has been divided when the image data is input to the Backbone 41.

The Encoder 43 converts the data that has been input from the adder 42 to vector data, and inputs the vector data to the Decoder 44. In a case where the vector data is input, the Decoder 44 outputs data on a Bounding Box, data on an Object Category, and data on an Action. The data on the Bounding Box indicates an area of a person, an area of an object, or the like included in the image data. The data on the Object Category indicates an attribute of the area indicated by each of the Bounding Boxes. In the attributes, a person, an object, and the like are included. The data on the Action indicates a motion (action) of a person made with respect to the object. For example, the information processing apparatus 100 is able to specify the area of the person and the area of the object included in the image data by using the data on the Bounding Box and the data on the Object Category.

The information processing apparatus 100 performs a process of generating composite image data, a process in a learning phase, and a process in an inference phase. In the description below, a process of generating composite image data, a process performed in a learning phase, and a process performed in an inference phase will be described in this order.

First, the process of generating the composite image data performed by the information processing apparatus 100 will be described. The information processing apparatus 100 generates the composite image data on the basis of the learning data.

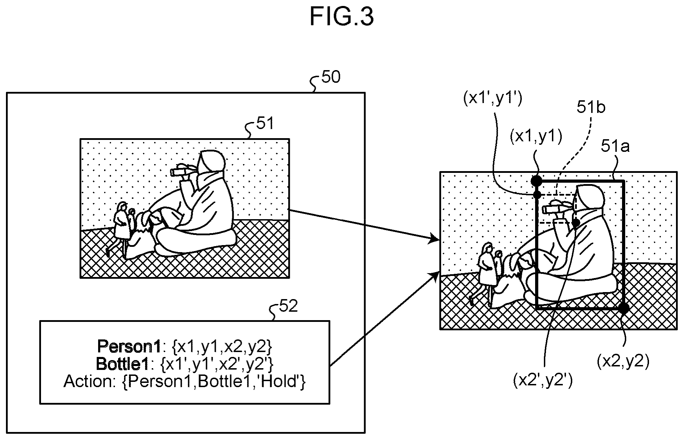

FIG. 3 is a diagram for explaining the learning data. As illustrated in FIG. 3, in learning data 50, image data 51 and annotation data 52 are included. For example, in the image data 51, an image of a person and an image of an object are included. The input data at the time at which the machine learning model 40 is trained corresponds to the image data 51, and a correct answer label corresponds to the annotation data 52.

In the annotation data 52, the data on the area of the person, the data on the area of the object, and the data on the motion of the person made with respect to the object are included. In the example illustrated in FIG. 3, the data on the area of the person is "Person 1: {x1, y1, x2, y2}". This indicates that the coordinates of the top left corner of an area 51a of the person is "x1, y1", and the coordinates of the bottom right corner of the area 51a of the person is "x2, y2".

The data on the area of the object (bottle) is "Bottle 1: {x1', y1', x2', y2'}". This indicates that the coordinates of the top left corner of an area 51b of the object is "x1', y1'", and the coordinates of the bottom right corner of the area 51b of the object is "x2', y2'".

The data on the motion of the person made with respect to the object is "Action: {Person1, Bottle1, Hold}". This indicates that the person included in the area 51a is holding the object (bottle) included in the area 51b.

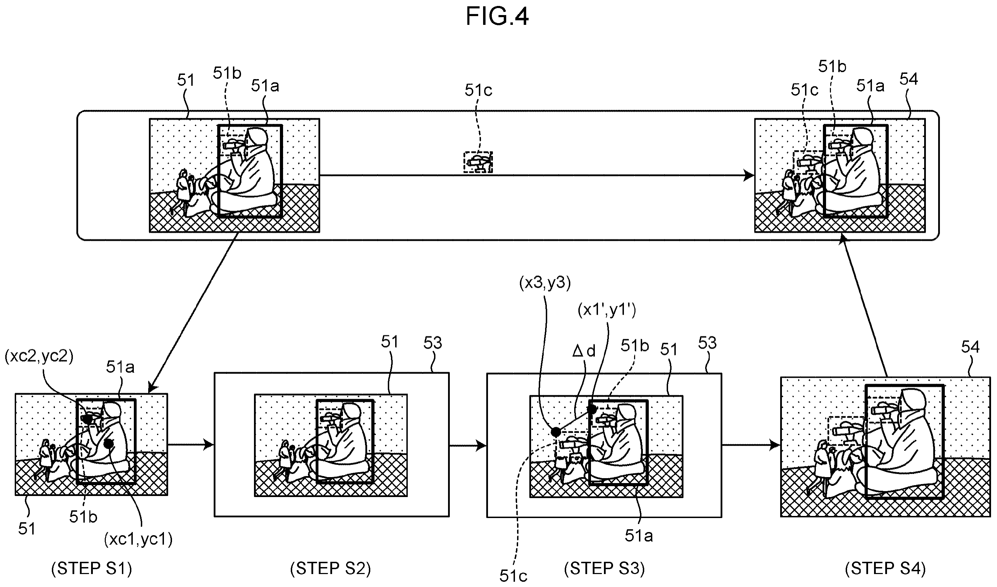

The information processing apparatus 100 generates the composite image data by using the learning data 50 illustrated in FIG. 3. FIG. 4 is a diagram for explaining a process of generating the composite image data performed by the information processing apparatus. The information processing apparatus 100 extracts the area 51a of the person and the area 51b of the object that are included in the image data 51 on the basis of the annotation data 52 that is included in the learning data 50. The information processing apparatus 100 generates composite image data 54 by performing the processes at Steps S1 to S4. As will be described later, the information processing apparatus 100 generates the composite image data 54 by combining an image 51c and the image data 51.

A process performed at Step S1 will be described. The information processing apparatus 100 specifies the center coordinates (xc1, yc1) of the area 51a of the person. The information processing apparatus 100 specifies the center coordinates (xc2, yc2) of the area 51b of the object. The information processing apparatus specifies the combining direction on the basis of the positional relationship between the center coordinates (xc1, yc1) and the center coordinates (xc2, yc2). The combining direction indicates whether the image 51c is to be combined on the "left side" with respect to the area 51a of the person, or whether the image 51c is to be combined on the "right side" with respect to the area 51a of the person.

In a case of "xc1 - xc2 < 0", the information processing apparatus 100 determines that the combining direction is the "left side". In a case of "xc1 - xc2 ≥ 0", the information processing apparatus 100 determines that the combining direction is the "right side". In the example illustrated in FIG. 4, the state corresponds to "xc1 - xc2 < 0", the combining direction is the "left side".

A process performed at Step S2 will be described. The information processing apparatus 100 generates image data 53 by generating a blank space around the image data 51.

A process performed at Step S3 will be described. The information processing apparatus 100 copies the image of the area 51b of the object included in the image data 51. The combining direction determined at Step S1 is the "left side", so that the information processing apparatus 100 arranges the copied image 51c in the area that is located at a position on the left side of the area 51a of the person and that does not overlap with the area 51a. In addition, the information processing apparatus 100 adjusts the coordinates of the image 51c such that a distance Δd between the coordinates (x1', y1') of the top left corner of the area 51b of the object and the coordinates (x3, y3) of the top left corner of the arranged image 51c corresponds to a hyperparameter that has been set in advance.

A process performed at Step S4 will be described. The information processing apparatus 100 generates the composite image data 54 by deleting the blank space contained in the image data 53. In the example illustrated in FIG. 4, a case in which the image 51c is included in the region of the image data 51 has been described, but there may be a case in which a part of the image 51c is included in the blank space portion contained in the image data 53, in accordance with the process performed at Step S3. In a case where the part of the image 51c is included in the blank space portion contained in the image data 53, a portion that is the part of the image 51c and that is included in the blank space portion is deleted by the process performed at Step S4.

As described above in FIG. 4, as a result of the information processing apparatus 100 performing the processes at Step S1 to Step S4, the composite image data 54 in which the image data 51 and the image 51c are combined is generated.

The information processing apparatus 100 also generates a plurality of pieces of composite image data by repeatedly performing the processes described above in FIG. 4 on the learning data that is other than the learning data 50 that has been described above in FIG. 3.

Subsequently, the process in the learning phase performed by the information processing apparatus 100 will be described. For example, the information processing apparatus 100 performs contrastive learning on the machine learning model 40 by using the image data and the composite image data, and performs machine learning on the machine learning model 40 by using the learning data.

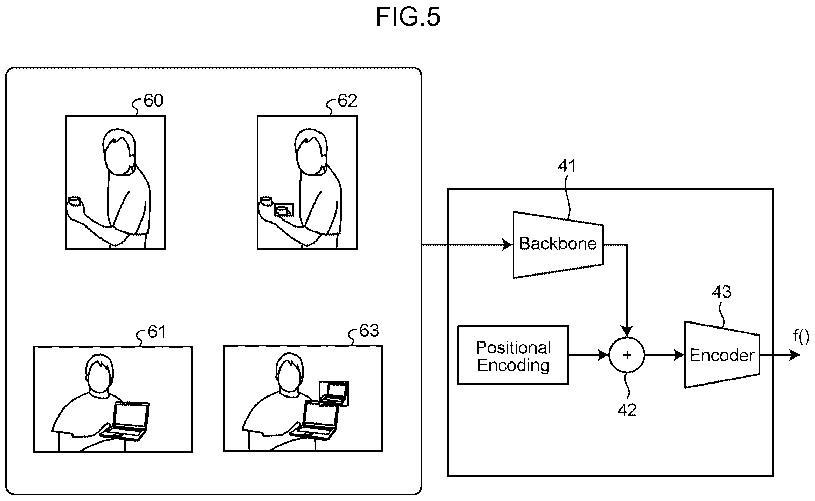

The contrastive learning performed by the information processing apparatus 100 will be described. FIG. 5 is a diagram for explaining the contrastive learning performed by the information processing apparatus. In FIG. 5, for convenience of description, a description will be made by using image data 60 and 61 and composite image data 62 and 63. The image data 60 and 61 is the image data included in the learning data. The image data 60 and the image data 61 each have a common characteristic in that the person is holding the object.

The composite image data 62 is the composite image data that is generated by using the image data 60 and performing the process that has been described above in FIG. 4. The composite image data 63 is the composite image data that is generated by using the image data 61 and performing the process that has been described above in FIG. 4. The composite image data 61 and the composite image data 63 each have a common characteristic in that the person is holding the object and another object is arranged in the vicinity of the person.

In the description below, the image data 60 and 61 and the image data that includes the image of the object and the image of the person who is holding the object are referred to as a "positive example" as appropriate. The composite image data that is obtained by performing the processes described above in FIG. 4 is referred to as a "negative example" as appropriate. As described above, both of the positive examples each have a common characteristic, and both of the negative examples each also have a common characteristic. In the contrastive learning performed by the information processing apparatus 100, the Encoder 43 is trained such that the respective outputs from the Encoder 43 obtained when the two positive examples are input approach each other. The information processing apparatus 100 trains the Encoder 43 such that the respective outputs from the Encoder 43 obtained when the two negative examples are input approach each other.

Moreover, a combination of the positive example and the negative example does not have a common characteristic, so that the information processing apparatus 100 trains the Encoder 43 such that each of the outputs from the Encoder 43 obtained when the positive example and the negative example are input diverge from each other.

The information processing apparatus 100 obtains an output f() from the Encoder 43 by inputting each of the image data 60 and 61 and the composite image data 62 and 63 to the Backbone 41 included in the machine learning model 40. For example, f() is vector data.

For example, the information processing apparatus 100 calculates an error (a cross-entropy error of a cosine similarity) between the output f() obtained when the positive example or the negative example is input to the Backbone 41 and the output f() obtained when the other of the positive example or the negative example is input to the Backbone 41 by using Formula (1).

$$Ls = -\frac{1}{N}\sum_{i}^{N} \log l^{x_i \cdot x_j} \qquad \cdots (1)$$

$l^{x_i, x_j}$ indicated in Formula (1) is calculated by using Formula (2). f() indicated in Formula (2) denotes the output from the Encoder 43 described above. g() denotes a cosine similarity.

$$l^{x_i \cdot x_j} = \frac{e^{f(g(x_i),g(x_j))/\tau}}{\sum_{k=1m \ k\neq i}^{aN} e^{g(g(x_i),g(x_k))/\tau}} \qquad \cdots (2)$$

For example, the output from the Encoder 43 obtained by inputting the image data 60 to the Backbone 41 is denoted by $f_{60}()$. The output from the Encoder 43 obtained by inputting the image data 61 to the Backbone 41 is denoted by $f_{61}()$. The output from the Encoder 43 obtained by inputting the composite image data 62 to the Backbone 41 is denoted by $f_{62}()$. The output from the Encoder 43 obtained by inputting the composite image data 63 to the Backbone 41 is denoted by $f_{63}()$.

The value of the cross-entropy error decreases as f() that is output from the Encoder 43 as a result of the positive example being input to the Backbone 41 and f() that is output from the Encoder 43 as a result of the other positive example being input to the Backbone 41 approach each other. For example, the information processing apparatus 100 trains the parameters for the Encoder 43 such that the value of $f_{60}()$ and the value of $f_{61}()$ approach each other.

The value of the cross-entropy error decreases as f() that is output from the Encoder 43 as a result of the negative example being input to the Backbone 41 and f() that is output from the Encoder 43 as a result of the other negative example being input to the Backbone 41 approach each other. For example, the information processing apparatus 100 trains the parameters for the Encoder 43 such that the value of $f_{62}()$ and the value of $f_{63}()$ approach each other.

The value of the cross-entropy error decreases as f() that is output from the Encoder 43 as a result of the positive example being input to the Backbone 41 and f() that is output from the Encoder 43 as a result of the negative example being input to the Backbone 41 diverge from each other. For example, the information processing apparatus 100 trains the parameters for the Encoder 43 such that $f_{60}()$ and $f_{62}()$ diverge from each other. The information processing apparatus 100 trains the parameters for the Encoder 43 such that $f_{60}()$ and $f_{63}()$ diverge from each other. The information processing apparatus 100 trains the parameters for the Encoder 43 such that $f_{61}()$ and $f_{62}()$ diverge from each other. The information processing apparatus 100 trains the parameters for the Encoder 43 such that $f_{61}()$ and $f_{63}()$ diverge from each other.

Here, the information processing apparatus 100 performs machine learning on the parameters for the Encoder 43 and the Decoder 44 included in the machine learning model 40 on the basis of an error backpropagation method while performing the contrastive learning that has been described in FIG. 5.

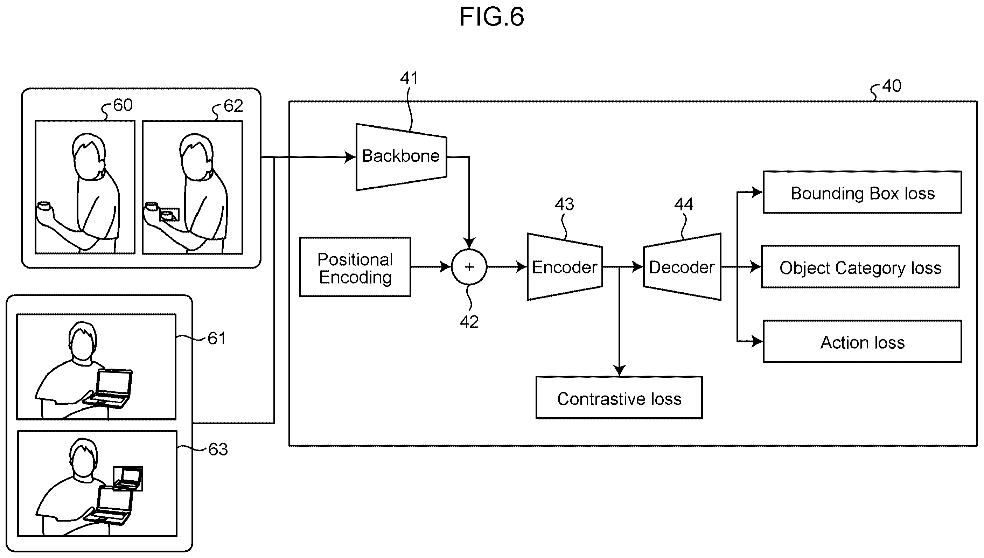

FIG. 6 is a diagram for explaining the machine learning performed by the information processing apparatus. The image data 60 and 61 are image data included in the learning data, and the correct answer labels (annotation data) corresponding to the image data 60 and 61 are set in advance. The composite image data 62 is generated on the basis of the image data 60. The composite image data 63 is generated on the basis of the learning data 61.

For example, the information processing apparatus 100 acquires an output result from the Decoder 44 by inputting the image data 60 to the Backbone 41 included in the machine learning model 40. The information processing apparatus 100 compares the annotation data corresponding to the image data 60 with the output result acquired from the Decoder 44, and calculates a Bounding Box Loss, an Object Category Loss, and an Action Loss.

Furthermore, the information processing apparatus 100 inputs a combination of the positive example and the positive example, a combination of the positive example and the negative example, or a combination of the negative example and the negative example as described above in FIG. 5 to the Backbone 41 included in the machine learning model 40, and calculates the cross-entropy error (Contrastive Loss) on the basis of Formula (1).

The information processing apparatus 100 performs machine learning on the parameters for the Encoder 43 and the Decoder 44 that are included in the machine learning model 40 on the basis of the error backpropagation method such that the overall error obtained by adding the cross-entropy error decreases to the Bounding Box Loss, the Object Category Loss, and the Action Loss.

As described above, the information processing apparatus 100 according to the present embodiment extracts the image of the object that is used by the person from the image data, and generates the composite image data in which the extracted image is arranged in the vicinity of the person included in the image data. The information processing apparatus 100 is able to generate the machine learning model 40 in which the person who uses the object is able to be identified by performing the machine learning on the machine learning model 40 by using the composite image data.

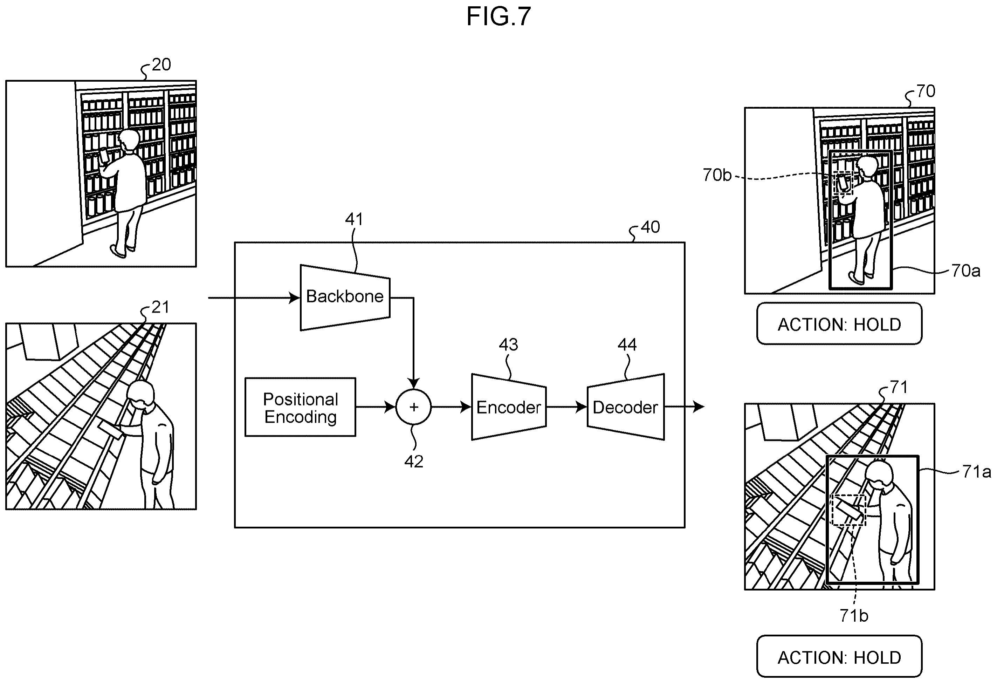

In the following, a process in the inference phase performed in the information processing apparatus 100 will be described. FIG. 7 is a diagram for explaining the process performed in the inference phase according to the present embodiment. The machine learning model 40 is the machine learning model that has been trained by the processes in the learning phase described above.

The information processing apparatus 100 obtains an output result 70 by inputting the image data 20 to the Backbone 41 included in the machine learning model 40. In the output result 70, an area 70a of a person and an area 70b of an object are specified, and an action of a "hold" of the person performed with respect to the object are indicated. A plurality of similar commodity products are included in the image data 20, but it is estimated with high accuracy which object is affected by the motion of the person.

The information processing apparatus 100 obtains an output result 71 by inputting the image data 21 to the Backbone 41 included in the machine learning model 40. In the output result 71, an area 71a of the person and an area 71b of the object are specified, and an action of a "hold" of the person performed with respect to the object is indicated. The image data 21 contains a large number of objects in the background, but it is estimated with high accuracy which object is affected by the motion of the person.

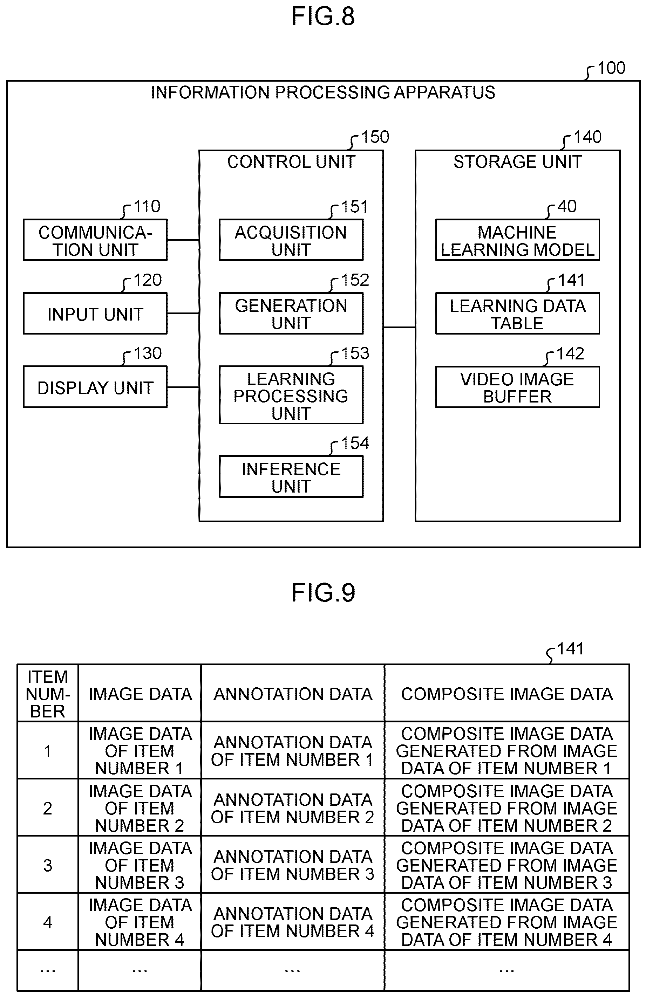

In the following, an example of a configuration of the information processing apparatus 100 that performs the above described processes will be described. FIG. 8 is a functional block diagram illustrating the configuration of the information processing apparatus according to the present embodiment. As illustrated in FIG. 8, the information processing apparatus 100 includes a communication unit 110, an input unit 120, a display unit 130, a storage unit 140, and a control unit 150.

The communication unit 110 performs data communication between the camera 30 and an external device or the like via the network 35. The communication unit 110 is a Network Interface Card (NIC), or the like. For example, the communication unit 110 receives the video image data from the camera 30.

The input unit 120 inputs various kinds of information to the control unit 150 included in the information processing apparatus 100. For example, a user may operate the input unit 120 and input an execution command for a process in the learning phase and an execution command for a process in the inference phase. Furthermore, the user may operate the input unit 120 and designate the hyperparameter that has been described above in FIG. 4.

The display unit 130 displays the information that is output from the control unit 150.

The storage unit 140 includes the machine learning model 40, a learning data table 141, and a video image buffer 142. The storage unit 140 is a storage device, such as a memory.

The machine learning model 40 is a machine learning model constituted as a Transformer based model. For example, the machine learning model 40 is HOID. An explanation related to the machine learning model 40 is the same as the explanation that is related to the machine learning model 40 and that has been described above in FIG. 2.

The learning data table 141 is a table that stores therein a plurality of pieces of learning data. FIG. 9 is a diagram illustrating one example of a data structure of the learning data table. As illustrated in FIG. 9, the learning data table 141 includes an item number, image data, annotation data, and composite image data. The item number is a number for identifying each record included in the learning data table 141. The image data and the annotation data correspond to the image data and the annotation data, respectively, that are included in the learning data and that are described above in FIG. 3. In the image data, an image of a person and an image of an object, such as a commodity product, are included. The composite image data is the composite image data generated by performing the processes described above in FIG. 4. The composite image data is generated by a generation unit 152 that will be described later.

The video image buffer 142 is a buffer for storing the video image data captured by the camera 30. The video image buffer 142 may store therein, in an associated manner, the identification information on the camera and the video image data.

A description will be given here by referring back to FIG. 8. The control unit 150 includes an acquisition unit 151, the generation unit 152, a learning processing unit 153, and an inference unit 154. The control unit 150 is a Central Processing Unit (CPU), a Graphics Processing Unit (GPU), or the like.

The acquisition unit 151 acquires video image data from the camera 30, and stores the acquired video image data in the video image buffer 142. The acquisition unit 151 may acquire the data stored in the learning data table 141 from the external device, or the like and may store the acquired data in the storage unit 140.

The generation unit 152 performs the processes described above in FIG. 4 on the basis of the image data included in the learning data, and generates the composite image data. The generation unit 152 stores the generated composite image data in the learning data table 141. In the following, one example of the process performed by the generation unit 152 will be described.

The generation unit 152 acquires a combination of the image data and the annotation data from the learning data table 141. The generation unit 152 extracts an area of a person and an area of an object from the image data on the basis of the annotation data.

The generation unit 152 duplicates the image of the area of the object included in the image data. The generation unit 152 specifies, as described above the process performed at Step S1 in FIG. 4, both of the center coordinates of the area of the person and the center coordinates of the area of the object that are included in the image data, and determines the combining direction of the duplicated image of the object on the basis of each of the center coordinates.

as described above the process performed at Step S2 in FIG. 4, the generation unit 152 generates a blank space around the image data. The generation unit 152 adjusts, as described above the process performed at Step S3 in FIG. 4, the coordinates of the duplicated image such that the distance $\Delta d$ between the top left corner of the area of the object included in the image data and the coordinates of the top left corner of the duplicated image corresponds to the hyperparameter that has been set in advance. The generation unit 152 generates the composite image data by deleting the blank space, as described above the process performed at Step S4 in FIG. 4.

The learning processing unit 153 uses the learning data table 141, and trains the machine learning model 40. For example, the learning processing unit 153 performs both of the contrastive learning described above in FIG. 5 and the machine learning described above in FIG. 6.

The learning processing unit 153 acquires, from the learning data table 141, a combination of the image data (positive example) and the image data (positive example), a combination of the image data (positive example) and the composite image data (negative example), or a combination of the composite image data (negative example) and the composite image data (negative example).

The learning processing unit 153 inputs the combination of the positive example and positive example, the combination of the positive example and the negative example, or the combination of the negative example and the negative example to the Backbone 41 included in the machine learning model 40, and calculates the cross-entropy error (Contrastive Loss) on the basis of Formula (1).

The learning processing unit 153 acquires an output result from the Decoder 44 by inputting the positive example to the Backbone 41 included in the machine learning model 40. The learning processing unit 153 compares the annotation data corresponding to the image data with the output result obtained from the Decoder 44, and calculates the Bounding Box Loss, the Object Category Loss, and the Action Loss.

The learning processing unit 153 performs machine learning on the parameters for the Encoder 43 and the Decoder 44 that are included in the machine learning model 40 on the basis of the error backpropagation method such that the overall error obtained by adding the cross-entropy error to the Bounding Box Loss, the Object Category Loss, and the Action Loss decreases.

The inference unit 154 uses the machine learning model 40 that has been trained by the learning processing unit 153, and infers which object is affected by the motion of the person. The processes performed by the inference unit 154 correspond to the processes described above in FIG. 7.

For example, the inference unit 154 acquires the image data from the video image buffer 142 and infers the area of the person, the area of the object, and the motion of the person made with respect to the object by inputting the image data to the Backbone 41 included in the machine learning model 40.

As described above in FIG. 1, the camera 30 is installed in the inside of the store in which the commodity product shelf that accommodates commodity products is provided, and, in the image data (video image data) captured by the camera 30, the area of the commodity product shelf is included. As a result of this, the inference unit 154 is able to identify a behavior of a customer taking out a commodity product from the commodity product shelf by inputting the image data to the Backbone 41 included in the machine learning model 40.

The inference unit 154 may output the inference result and cause the display unit 130 to output and display the inference result. The inference unit 154 outputs, as the inference result, screen data in which the area of the person, the area of the object, and the motion of the person made with respect to the object are arranged on the image data to the display unit 130.

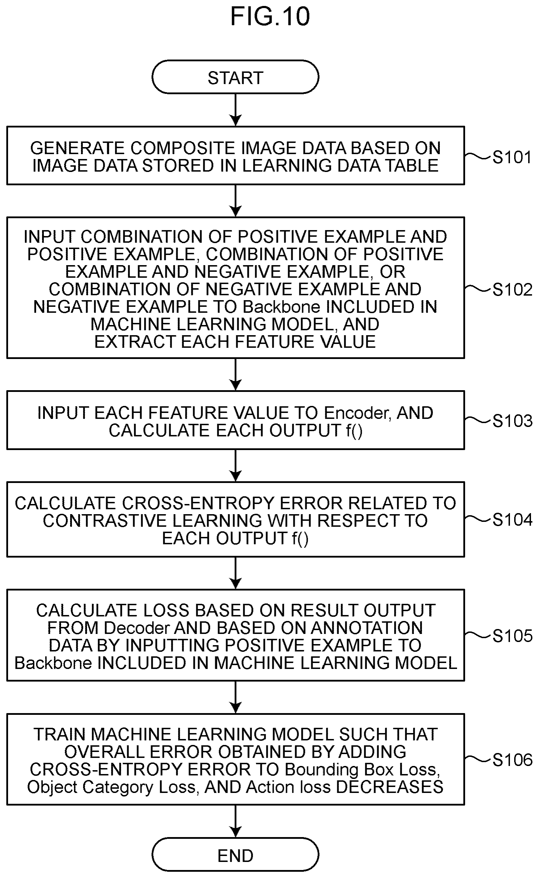

In the following, one example of the flow of the process performed in the information processing apparatus 100 according to the present embodiment will be described. FIG. 10 is the flowchart illustrating the processes performed in the information processing apparatus according to the present embodiment. As illustrated in FIG. 10, the generation unit 152 included in the information processing apparatus 100 generates the composite image data on the basis of the image data stored in the learning data table 141 (Step S101).

The learning processing unit 153 included in the information processing apparatus 100 inputs the combination of the positive example and the positive example, the combination of the positive example and the negative example, or the combination of the negative example and the negative example to the Backbone 41 included in the machine learning model 40, and extracts each of the feature values (Step S102).

The learning processing unit 153 inputs each of the feature values to the Encoder 43, and calculates each of the outputs f() (Step S103). The learning processing unit 153 calculates the cross-entropy error related to the contrastive learning with respect to each of the outputs f() (Step S104).

The learning processing unit 153 calculates a loss on the basis of the result that is output from the Decoder 44 and on the basis of the annotation data by inputting the positive example to the Backbone 41 included in the machine learning model 40 (Step S105). In the loss, the Bounding Box Loss, the Object Category Loss, and the Action Loss are included.

The learning processing unit 153 trains the machine learning model 40 such that the overall error obtained by adding the cross-entropy error to the Bounding Box Loss, the Object Category Loss, and the Action Loss decreases (Step S106).

In the following, the effects of the information processing apparatus 100 according to the present embodiment will be described. The information processing apparatus 100 extracts the image of the object that is used by the person from the image data, and generates the composite image data in which the extracted image is arranged in the vicinity of the person included in the image data. The information processing apparatus 100 is able to generate the machine learning model 40 by which the person who uses the object is able to be identified by performing machine learning on the machine learning model 40 by using the composite image data.

In a case where the information processing apparatus 100 generates the composite image data, the information processing apparatus 100 receives a setting of the hyperparameter, as described above in FIG. 4. The information processing apparatus 100 arranges the image 51c such that the distance Δd between the coordinates of the top left corner of the area 51b of the object and the coordinates of the top left corner of the arranged image 51c corresponds to the hyperparameter that has been set in advance, under the condition that the image 51c does not overlap with the area 51a of the person. As a result of this, it is possible to generate the pseudo composite image data in which a similar object is included around the person who is holding the object.

the information processing apparatus 100 trains the Encoder 43 in the contrastive learning such that the respective outputs from the Encoder 43 obtained when the two positive examples are input approach each other. The information processing apparatus 100 trains the Encoder 43 such that the respective outputs from the Encoder 43 obtained when the two negative examples are input approach each other. Both of the positive examples have the common characteristic, and both of the negative examples also have the common characteristic, so that it is possible to adjust the parameter for the Encoder 43 such that the respective outputs from the Encoder 43 approach each other when the pieces of image data each having the common characteristic are input to the machine learning model 40.

The information processing apparatus 100 trains the Encoder 43 such that, in the contrastive learning, each of the outputs from the Encoder 43 obtained when the positive example and the negative example are input diverge from each other. The positive example and the negative example do not have a similar characteristic, so that it is possible to adjust the parameters for the Encoder 43 such that the respective outputs from the Encoder 43 obtained when pieces of image data each having a different characteristic are input to the machine learning model 40 diverge from each other.

The information processing apparatus 100 infers the area of the person, the area of the object, and the motion of the person with respect to the object by inputting the image data captured by the camera 30 to the Backbone 41 included in the machine learning model 40. For example, as described above in FIG. 1, the camera 30 is installed in the inside of the store in which the commodity product shelf that accommodates the commodity products is provided, and, in the image data (video image data) captured by the camera 30, the area of the commodity product shelf is included. As a result of this, by inputting the image data to the Backbone 41 included in the machine learning model 40, the information processing apparatus 100 is able to identify a behavior of a customer taking out a commodity product from the commodity product shelf.

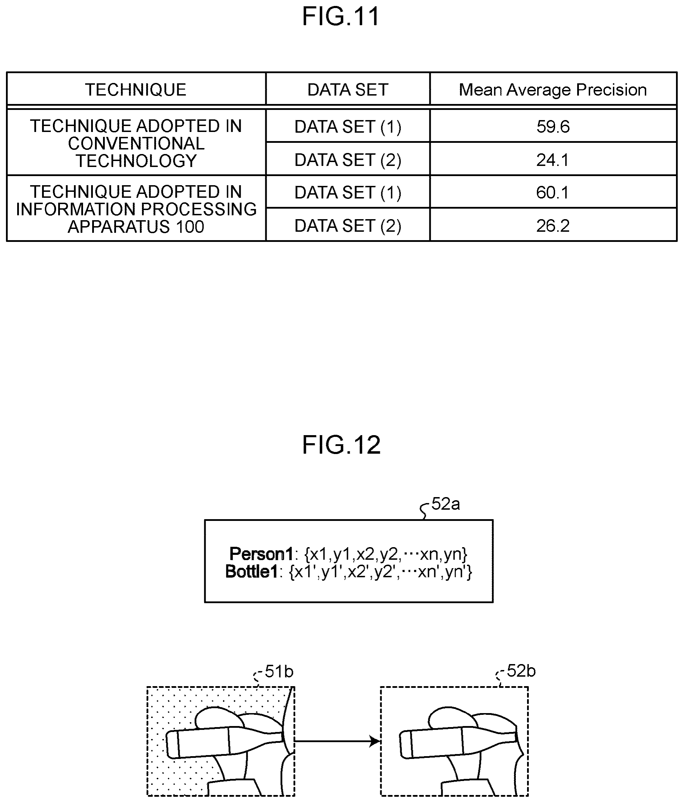

Here, a result of an accuracy evaluation (Mean Average Precision) performed by using a technique that is adopted in the information processing apparatus 100 as compared with a technique adopted in the conventional technology will be described. FIG. 11 is a diagram illustrating the result of the accuracy evaluation. Data set (1) is a release data set obtained by collecting images in each of which someone is holding an object in various scenes. Data set (2) is a closed data set obtained by collecting images in each of which someone is extending a commodity product in a store.

In the technique adopted in the conventional technology, the accuracy evaluation with respect to the data set (1) became "59.6", and the accuracy evaluation with respect to the data set (2) became "24.1". On the other hand, in the information processing apparatus 100, the accuracy evaluation with respect to the data set (1) became "60.1", and the accuracy evaluation with respect to the data set (2) became "26.2". In other words, it is found that the accuracy evaluation is higher in the technique that is adopted in the information processing apparatus 100 than that of the technique that is adopted in the conventional technology with respect to both of the data sets.

Moreover, the content of the process performed by the information processing apparatus 100 described above and the content of the data structure of each of the pieces of data are one example. For example, in the annotation data 52 that has been described above in FIG. 3, the area 51a of the person has been indicated by the coordinates at the top left corner and the coordinates at the bottom right corner, whereas the area 51b of the object has been indicated by the coordinates at the top left corner and the coordinates at the bottom right corner, but the example is not limited to this. For example, as illustrated in FIG. 12, it is possible to augment the annotation data.

FIG. 12 is a diagram illustrating an example of an augmentation of the annotation data. In annotation data 52a illustrated in FIG. 12, a plurality of coordinates tracing a contour of a person are set. Furthermore, in the annotation data 52a, the plurality of coordinates on the contour of an object are set. For example, in the annotation data 52 described above in FIG. 3, it is possible to extract the area 51b of the object, whereas, in the annotation data 52a, it is possible to extract a contour 52b of the object. In the area 51b of the object, an area that does not contain the object ends up being included, but, in the contour 52b of the object, an image containing only the object is included. As a result of this, it is possible to allow the image of the object that is to be combined onto the composite image data to be the image of the object itself.

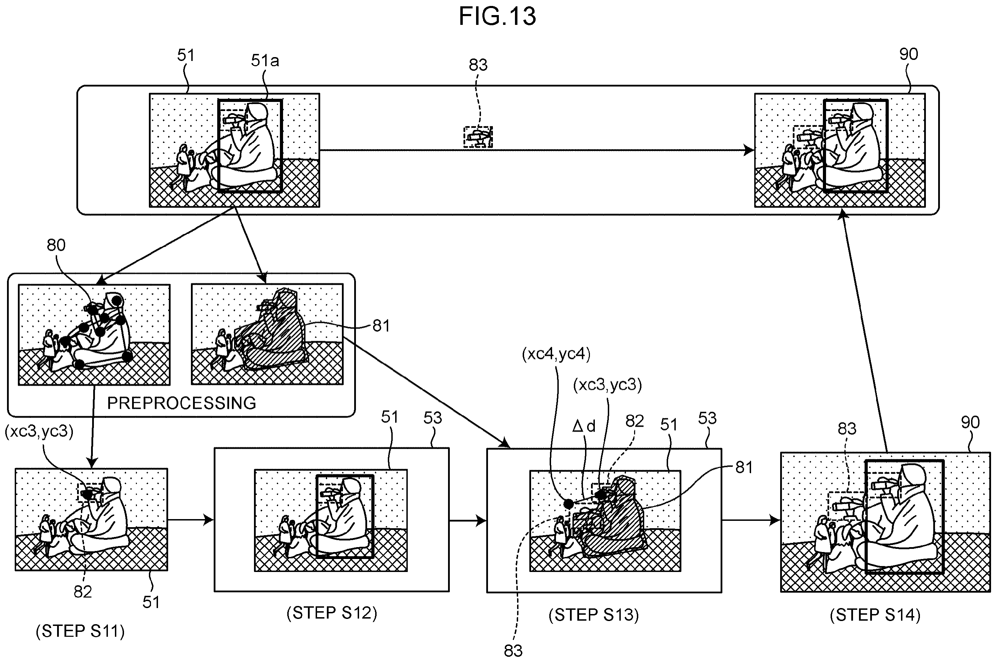

Furthermore, the generation unit 152 included in the information processing apparatus 100 generates the composite image data by performing the processes described above in FIG. 4, but the process of generating the composite image data is not limited to this. For example, the generation unit 152 included in the information processing apparatus 100 may perform the processes illustrated in FIG. 13 and generate the composite image data.

FIG. 13 is a diagram illustrating for explaining another process of generating the composite image data. The generation unit 152 included in the information processing apparatus 100 performs a process of extracting skeleton data from the area 51a of the person and a process of extracting a segmentation of the person as preprocessing.

One example of a process of extracting the skeleton data from the area 51a of the person performed by the generation unit 152 will be described. The generation unit 152 infers skeleton data 80 on the person by inputting the area 51a of the person included in the image data 51 to a skeleton inference model. The skeleton inference model is a trained model, and is a model in which the image data on the area of the person is used as an input and the skeleton data on the person is used as an output. The skeleton inference model is a Neural Network (NN), or the like.

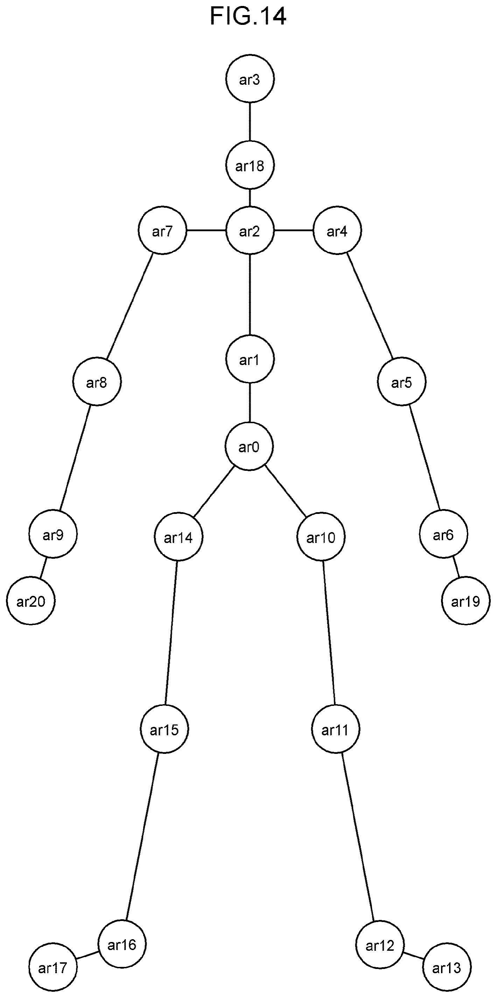

The skeleton data is data in which the two-dimensional or three-dimensional coordinates are set with respect to a plurality of joints that are defined by a skeleton model of a human body. Here, the coordinates of each of the joints included in the skeleton data is defined as the two-dimensional coordinates. FIG. 14 is a diagram illustrating one example of the skeleton model of the human body. For example, as illustrated in FIG. 14, the skeleton model of the human body is defined by 21 joints ar0 to ar20.

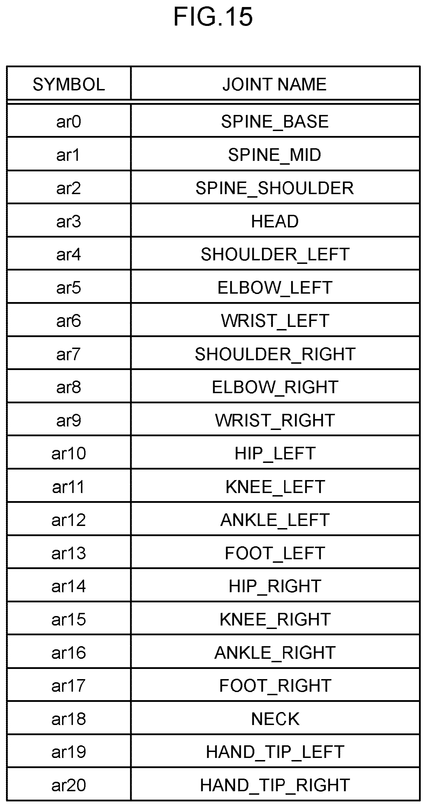

The relationship between each of the joints ar0 to ar20 illustrated in FIG. 14 and the corresponding joint names is the one illustrated in FIG. 15. FIG. 15 is a diagram illustrating one example of the joint names. For example, the joint name of the joint ar0 is "SPINE_BASE". The joint names of the joints ar1 to a20 are as illustrated in FIG. 15, and descriptions thereof will be omitted.

A process of extracting a segmentation of the person performed by the generation unit 152 will be described. By performing segmentation on the image data 51, the generation unit 152 gathers areas for each group having a similar feature value (a color, a texture, or a subject) or the like included in the image data 51, and divides the gathered area into a plurality of areas. The generation unit 152 compares the divided plurality of areas with the area 51a that is related to the person and that is designated by the annotation data, and extracts the most overlapping area with the area 51a of the person from among the plurality of areas as the area of the person. In the example illustrated in FIG. 13, the generation unit 152 extracts an area 81 as the area of the person.

The generation unit 152 generates composite image data 90 by performing the processes at Step S11 to S14 after having performed the preprocessing described above.

A process performed at Step S11 will be described. The generation unit 152 specifies the coordinates (xc3, yc3) of a point of action on the basis of the skeleton data 80. For example, the generation unit 152 specifies the coordinates of the joint ar19 of the left wrist from among each of the joints ar0 to ar20 included in the skeleton data 80 as the coordinates of the point of action. The generation unit 152 specifies the area of a predetermined region on a basis of the coordinates (xc3, yc3) of the point of action as an area 82 of the object. Moreover, the generation unit 152 may compare the area that is related to the object that is designated by the annotation data with the joint ar20 of the right wrist and the joint ar19 of the left wrist, and may specify the coordinates of the joint of the wrist that is closer to the area of the object as the coordinates of the point of action.

A process performed at Step S12 will be described. The generation unit 152 generates the image data 53 by generating a blank space around the image data 51.

A process performed at Step S13 will be described. The generation unit 152 copies the image of the area 82 of the object included in the image data 51. The copied image is denoted by an image 83. The generation unit 152 arranges the copied image 83 in the area that does not overlap with the area 81 of the person. In addition, the generation unit 152 adjusts the coordinates of the image 83 such that the distance $\Delta d$ between the coordinates (xc3, yc3) of the point of action of the area 82 of the object and the coordinates (xc4, yc4) of the top left corner of the arranged image 83 corresponds to the hyperparameter that has been set in advance.

A process performed at Step S4 will be described. The generation unit 152 generates the composite image data 90 by deleting the blank space generated in the image data 53.

As described above in FIG. 13, as a result of the information processing apparatus 100 performing the preprocessing and performing the processes at Step S11 to Step S14, the composite image data 90 in which the image data 51 and the image 83 are combined is generated.

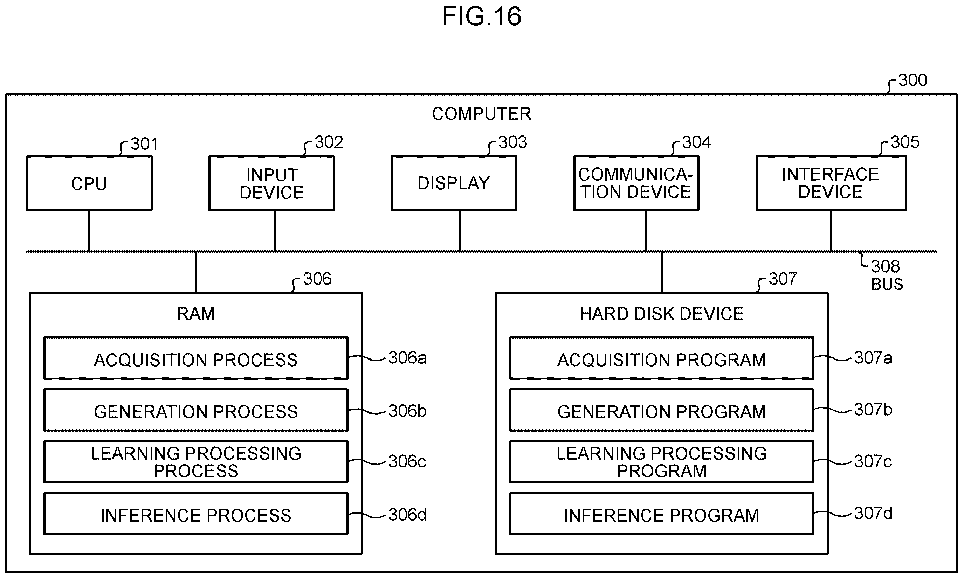

In the following, one example of a hardware configuration of a computer that implements the same function as that of the information processing apparatus 100 described above will be described. FIG. 16 is a diagram illustrating one example of a hardware configuration of a computer that implements the same function as that of the information processing apparatus according to the embodiment.

As illustrated in FIG. 16, the computer 300 includes a CPU 301 that executes various kinds of arithmetic processing, an input device 302 that receives an input of data from a user, and a display 303. Furthermore, the computer 300 includes a communication device 304 that sends and receives data to and from an external device or the like via a wired or wireless network, and an interface device 305. Furthermore, the computer 300 includes a RAM 306 that temporarily stores therein various kinds of information and a hard disk device 307. In addition, each of the devices 301 to 307 is connected to a bus 308.

The hard disk device 307 includes an acquisition program 307a, a generation program 307b, a learning processing program 307c, and an inference program 307d. The CPU 301 reads each of the programs 307a to 307d and loads the programs into the RAM 306.

The acquisition program 307a functions as an acquisition process 306a. The generation program 307b functions as a generation process 306b. The learning processing program 307c functions as a learning processing process 306c. The inference program 307d functions as an inference process 306d.

The process of the acquisition process 306a corresponds to the process performed by the acquisition unit 151. The process of the generation process 306b corresponds to the process performed by the generation unit 152. The process of the learning processing process 306c corresponds to the process performed by the learning processing unit 153. The process of the inference process 306d corresponds to the process performed by the inference unit 154.

Moreover, each of the programs 307a to 307d does not need to be stored in the hard disk device 307 from the beginning. For example, each of the programs is stored in a "portable physical medium", such as a flexible disk (FD), a CD-ROM, a DVD disk, a magneto-optic disk, an IC card, that is to be inserted into the computer 300. Then, the computer 300 may read each of the programs 307a to 307d from the portable physical medium and execute the programs.

Reference Signs List

40    machine learning model
100    information processing apparatus

110 communication unit
120 input unit
130 display unit
140 storage unit
141 learning data table
142 video image buffer
150 control unit
151 acquisition unit
152 generation unit
153 learning processing unit
154 inference unit

## Claims

1. A generation program that causes a computer to execute a process comprising:

   acquiring an image that includes a person;
   extracting an object that is used by the person included in the image by analyzing the acquired image;
   generating a composite image in which the extracted object is arranged at a position that satisfies a predetermined condition on a basis of a position of the object that is used by the person included in the acquired image; and
   generating, by using the generated composite image, a machine learning model that has been trained to identify the person who uses the object.

2. The generation program according to claim 1, wherein
   the generating the composite image includes

   receiving setting of a parameter based on a distance between a coordinate position of the person and a coordinate position of the object held by the person,
   generating, based on the set parameter, a coordinate position of an arrangement candidate for the image of the extracted object,
   determining whether or not the generated coordinate position is included in an area related to a size of the object, and
   generating, based on a determined result, the composite image in which the image of the object is arranged on the acquired image.

3. The generation program according to claim 2, wherein

   the generating the composite image includes

   generating a first composite image based on a first object that is included in a first image, and
   generating a second composite image based on a second object that is included in a second image, and

   the generating the machine learning model includes

   training an encoder included in the machine learning model such that an output result obtained when the first image is input to the encoder and an output result obtained when the second image is input to the encoder approach each other,
   training the encoder such that the output result obtained when the first image is input to the encoder and an output result obtained when the first composite image is input to the encoder diverge from each other, and
   training the encoder such that the output result obtained when the first composite image is input to the encoder and an output result obtained when the second composite image is input to the encoder approach each other.

4. The generation program according to claim 1, further comprising identifying a behavior of the person taking out a commodity product from a commodity product shelf by inputting an image that has been captured by a camera provided in an inside of a store and that includes both of the person and the commodity product shelf that accommodates the commodity products to the machine learning model.

5. The generation program according to claim 1, wherein the extracting the object includes

extracting skeleton information on the person included in the image by analyzing the acquired image, and extracting, based on the skeleton information, the object that is used by the person.

6. A generation method that causes a computer to execute a process comprising:

acquiring an image that includes a person;
extracting an object that is used by the person included in the image by analyzing the acquired image;
generating a composite image in which the extracted object is arranged at a position that satisfies a predetermined condition on a basis of a position of the object that is used by the person included in the acquired image; and
generating, by using the generated composite image, a machine learning model that has been trained to identify the person who uses the object.

7. The generation method according to claim 6, wherein
the generating the composite image includes

receiving setting of a parameter based on a distance between a coordinate position of the person and a coordinate position of the object held by the person,
generating, based on the set parameter, a coordinate position of an arrangement candidate for the image of the extracted object,
determining whether or not the generated coordinate position is included in an area related to a size of the object, and
generating, based on a determined result, the composite image in which the image of the object is arranged on the acquired image.

8. The generation method according to claim 7, wherein

the generating the composite image includes

generating a first composite image based on a first object that is included in a first image, and
generating a second composite image based on a second object that is included in a second image, and

the generating the machine learning model includes

training an encoder included in the machine learning model such that an output result obtained when the first image is input to the encoder and an output result obtained when the second image is input to the encoder approach each other,
training the encoder such that the output result obtained when the first image is input to the encoder and an output result obtained when the first composite image is input to the encoder diverge from each other, and
training the encoder such that the output result obtained when the first composite image is input to the encoder and an output result obtained when the second composite image is input to the encoder approach each other.

9. The generation method according to claim 6, further comprising identifying a behavior of the person taking out a commodity product from a commodity product shelf by inputting an image that has been captured by a camera provided in an inside of a store and that includes both of the person and the commodity product shelf that accommodates the commodity products to the machine learning model.

10. The generation method according to claim 6, wherein the extracting the object includes

extracting skeleton information on the person included in the image by analyzing the acquired image, and extracting, based on the skeleton information, the object that is used by the person.

11. An information processing apparatus comprising a control unit, wherein the control unit executes a process comprising:

acquiring an image that includes a person;

extracting an object that is used by the person included in the image by analyzing the acquired image;

generating a composite image in which the extracted object is arranged at a position that satisfies a predetermined condition on a basis of a position of the object that is used by the person included in the acquired image; and

generating, by using the generated composite image, a machine learning model that has been trained to identify the person who uses the object.

12. The information processing apparatus according to claim 11, wherein
the generating the composite image includes

receiving setting of a parameter based on a distance between a coordinate position of the person and a coordinate position of the object held by the person,

generating, based on the set parameter, a coordinate position of an arrangement candidate for the image of the extracted object,

determining whether or not the generated coordinate position is included in an area related to a size of the object, and

generating, based on a determined result, the composite image in which the image of the object is arranged on the acquired image.

13. The information processing apparatus according to claim 12, wherein

the generating the composite image includes

generating a first composite image based on a first object that is included in a first image, and

generating a second composite image based on a second object that is included in a second image, and

the generating the machine learning model includes

training an encoder included in the machine learning model such that an output result obtained when the first image is input to the encoder and an output result obtained when the second image is input to the encoder approach each other,

training the encoder such that the output result obtained when the first image is input to the encoder and an output result obtained when the first composite image is input to the encoder diverge from each other, and

training the encoder such that the output result obtained when the first composite image is input to the encoder and an output result obtained when the second composite image is input to the encoder approach each other.

14. The information processing apparatus according to claim 11, wherein the control unit executes the process further comprising identifying a behavior of the person taking out a commodity product from a commodity product shelf by inputting an image that has been captured by a camera provided in an inside of a store and that includes both of the person and the commodity product shelf that accommodates the commodity products to the machine learning model.

15. The information processing apparatus according to claim 11, wherein the extracting the object includes

extracting skeleton information on the person included in the image by analyzing the acquired image, and

extracting, based on the skeleton information, the object that is used by the person.

FIG.1

FIG.2

# FIG.3

Person1: {x1,y1,x2,y2}
Bottle1: {x1',y1',x2',y2'}
Action: {Person1,Bottle1,'Hold'}

FIG.4

FIG.5

FIG.6

FIG.7

EP 4 723 031 A1

## FIG.8

## FIG.9

| ITEM NUM-BER | IMAGE DATA | ANNOTATION DATA | COMPOSITE IMAGE DATA |
|---|---|---|---|
| 1 | IMAGE DATA OF ITEM NUMBER 1 | ANNOTATION DATA OF ITEM NUMBER 1 | COMPOSITE IMAGE DATA GENERATED FROM IMAGE DATA OF ITEM NUMBER 1 |
| 2 | IMAGE DATA OF ITEM NUMBER 2 | ANNOTATION DATA OF ITEM NUMBER 2 | COMPOSITE IMAGE DATA GENERATED FROM IMAGE DATA OF ITEM NUMBER 2 |
| 3 | IMAGE DATA OF ITEM NUMBER 3 | ANNOTATION DATA OF ITEM NUMBER 3 | COMPOSITE IMAGE DATA GENERATED FROM IMAGE DATA OF ITEM NUMBER 3 |
| 4 | IMAGE DATA OF ITEM NUMBER 4 | ANNOTATION DATA OF ITEM NUMBER 4 | COMPOSITE IMAGE DATA GENERATED FROM IMAGE DATA OF ITEM NUMBER 4 |
| ... | ... | ... | ... |

# FIG.10

START

GENERATE COMPOSITE IMAGE DATA BASED ON IMAGE DATA STORED IN LEARNING DATA TABLE — S101

INPUT COMBINATION OF POSITIVE EXAMPLE AND POSITIVE EXAMPLE, COMBINATION OF POSITIVE EXAMPLE AND NEGATIVE EXAMPLE, OR COMBINATION OF NEGATIVE EXAMPLE AND NEGATIVE EXAMPLE TO Backbone INCLUDED IN MACHINE LEARNING MODEL, AND EXTRACT EACH FEATURE VALUE — S102

INPUT EACH FEATURE VALUE TO Encoder, AND CALCULATE EACH OUTPUT f() — S103

CALCULATE CROSS-ENTROPY ERROR RELATED TO CONTRASTIVE LEARNING WITH RESPECT TO EACH OUTPUT f() — S104

CALCULATE LOSS BASED ON RESULT OUTPUT FROM Decoder AND BASED ON ANNOTATION DATA BY INPUTTING POSITIVE EXAMPLE TO Backbone INCLUDED IN MACHINE LEARNING MODEL — S105

TRAIN MACHINE LEARNING MODEL SUCH THAT OVERALL ERROR OBTAINED BY ADDING CROSS-ENTROPY ERROR TO Bounding Box Loss, Object Category Loss, AND Action loss DECREASES — S106

END

# FIG.11

| TECHNIQUE | DATA SET | Mean Average Precision |
|---|---|---|
| TECHNIQUE ADOPTED IN CONVENTIONAL TECHNOLOGY | DATA SET (1) | 59.6 |
| | DATA SET (2) | 24.1 |
| TECHNIQUE ADOPTED IN INFORMATION PROCESSING APPARATUS 100 | DATA SET (1) | 60.1 |
| | DATA SET (2) | 26.2 |

# FIG.12

$\qquad$ 52a

**Person1**: {x1,y1,x2,y2,···xn,yn}
**Bottle1**: {x1',y1',x2',y2',···xn',yn'}

51b 52b

# FIG.13

EP 4 723 031 A1

# FIG.14

# FIG.15

| SYMBOL | JOINT NAME |
|--------|-----------|
| ar0 | SPINE_BASE |
| ar1 | SPINE_MID |
| ar2 | SPINE_SHOULDER |
| ar3 | HEAD |
| ar4 | SHOULDER_LEFT |
| ar5 | ELBOW_LEFT |
| ar6 | WRIST_LEFT |
| ar7 | SHOULDER_RIGHT |
| ar8 | ELBOW_RIGHT |
| ar9 | WRIST_RIGHT |
| ar10 | HIP_LEFT |
| ar11 | KNEE_LEFT |
| ar12 | ANKLE_LEFT |
| ar13 | FOOT_LEFT |
| ar14 | HIP_RIGHT |
| ar15 | KNEE_RIGHT |
| ar16 | ANKLE_RIGHT |
| ar17 | FOOT_RIGHT |
| ar18 | NECK |
| ar19 | HAND_TIP_LEFT |
| ar20 | HAND_TIP_RIGHT |

# FIG.16

# FIG.17

FIG.18

EP 4 723 031 A1

# FIG.19

18b　18

18a

ACTION: HOLD

19a　19

19b

ACTION: HOLD

# FIG.20

20

21

## INTERNATIONAL SEARCH REPORT

| International application No. |
|---|
| **PCT/JP2023/019965** |

### A. CLASSIFICATION OF SUBJECT MATTER

*G06T 7/00*(2017.01)i
FI: G06T7/00 350C

According to International Patent Classification (IPC) or to both national classification and IPC

### B. FIELDS SEARCHED

Minimum documentation searched (classification system followed by classification symbols)

G06T7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2022-189456 A (FUJITSU LTD.) 22 December 2022 (2022-12-22) paragraphs [0011]-[0066], fig. 1-15 | 1-15 |
| A | JP 2023-28298 A (NTT COMMUNICATIONS CORPORATION) 03 March 2023 (2023-03-03) paragraphs [0070]-[0091], fig. 5-6 | 1-15 |

☐ Further documents are listed in the continuation of Box C.    ☑ See patent family annex.

| | | |
|---|---|---|
| \* | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **08 August 2023** | **15 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/019965**

| Patent document cited in search report | | | Publication date (day/month/year) | Patent family member(s) | Publication date (day/month/year) |
|---|---|---|---|---|---|
| JP | 2022-189456 | A | 22 December 2022 | (Family: none) | |
| JP | 2023-28298 | A | 03 March 2023 | (Family: none) | |

Form PCT/ISA/210 (patent family annex) (January 2015)

**EP 4 723 031 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018015408 A